# FASCICULE DE BREVET EUROPEEN

(11) **EP 4 178 732 B1**
(45) Date de publication et mention de la délivrance du brevet: **29.01.2025**
(21) Numéro de dépôt: 21739718.1
(22) Date de dépôt: 09.07.2021
(51) Int. Cl.: B07C 5/342, G01B 11/00, G01B 11/06

(54) **DISPOSITIF ET PROCÉDÉ D'INSPECTION D'OBJETS EN FLUX DEFILANT ET MACHINE COMPRENANT UN TEL DISPOSITIF**
DEVICE AND METHOD FOR INSPECTING OBJECTS IN A FLOWING STREAM AND MACHINE COMPRISING SUCH A DEVICE
VORRICHTUNG UND VERFAHREN ZUR INSPEKTION VON BEWEGTEN OBJEKTEN UND MASCHINE MIT EINER SOLCHEN VORRICHTUNG

(30) Priorité: 10.07.2020 FR 2007346
(43) Date de publication de la demande: 17.05.2023
(73) Titulaire: Pellenc Selective Technologies, 84120 Pertuis (FR)
(72) Inventeur: BOURELY, Antoine, 84240 LA TOUR D'AIGUES (FR); GROTUS, Nicolas, 13540 AIX-EN-PROVENCE (FR)
(74) Mandataire: Cabinet Nuss
(86) Numéro de dépôt international: PCT/EP2021/069121
(87) Numéro de publication internationale: WO 2022/008709

(56) Documents cités:
- EP-A1- 1 243 350
- WO-A1-2012/089185
- WO-A1-2017/149230
- DE-A1- 102018 121 448
- US-A- 5 101 442

## Description

La présente invention concerne le domaine de l'inspection d'objets en défilement, et notamment celui des machines de tri automatique et d'inspection d'objets défilant en flux sur un convoyeur, du type bande transporteuse par exemple. Typiquement, ce type de machines est utilisé pour le tri de déchets ménagers, et les convoyeurs utilisés dans ce contexte ont généralement des largeurs de 1 à 3 m, et les objets défilants des hauteurs jusqu'à environ 300 mm.

La présente invention a pour objet un dispositif d'inspection pouvant avantageusement, mais non limitativement, être mis en œuvre dans le domaine précité, ainsi qu'une machine comprenant au moins un tel dispositif et un procédé le mettant en œuvre, en particulier pour détecter la présence et/ou des caractéristiques dimensionnelles ou géométrique d'objets non reconnaissables par les techniques d'inspection usuelles exploitant des rayonnements réfléchis ou traversants.

En effet, dans les domaines du tri et de l'inspection par application de rayonnements, certains objets sont non reconnaissables par le détecteur car ils ne présentent aucune forme ou caractéristique spectrale caractéristique qui permettrait de les distinguer de la bande du convoyeur sur laquelle ils sont disposés. Dans le domaine spectral du proche infrarouge (-1000 nm à 2500 nm), c'est par exemple le cas des objets noirs contenant du noir de carbone, des métaux ou de matériaux inertes (verre, terre ou pierre par exemple). Dans la gamme des longueurs d'onde du domaine visible (compris entre 400 à 800 nm), les objets non reconnaissables par les systèmes de vision couleur sont ceux ne présentant pas de contraste ou un contraste très faible avec le fond qui les entoure. Sur une bande de convoyeur noire par exemple, les objets noirs ou transparents et incolores sont difficilement détectables, voire impossibles à détecter.

Or, pour des raisons de prix, de robustesse et de fiabilité, la plupart des convoyeurs de machines de tri sont noirs. Plus précisément, ils sont noirs à l'état neuf, et deviennent gris sombres ou marrons après usage et salissures, car ils ne sont généralement pas nettoyés.

Il a donc été proposé de détecter, et le cas échéant caractériser, ces objets défilants en effectuant une cartographie de tous les points matériels situés au-dessus du plan support du convoyeur, préférentiellement avec détermination de leurs hauteurs par rapport à ce plan, autrement dit une cartographie de tous les points de tous les objets au-dessus du plan du convoyeur.

Actuellement, plusieurs solutions différentes sont utilisées à cette fin de façon industrielle, à savoir :
- Mesure de temps de vol
- Caméras de stéréovision
- Profilomètre laser

La première solution consiste à émettre un rayonnement ou des ultrasons à partir d'une source située en hauteur, et à mesurer le temps de retour de l'onde vers l'émetteur après qu'elle ait ricoché sur l'objet mesuré. Sa précision est directement liée à la capacité de focaliser l'onde émise en un point précis, et à la précision de mesure du temps de retour. La contrainte de focalisation oriente la solution vers l'utilisation d'une lumière laser et d'un scanner, et l'usage de la lumière impose une électronique capable de mesurer des picosecondes pour obtenir des résolutions de l'ordre du millimètre. Cette solution nécessite donc une électronique très pointue, très coûteuse et délicate.

Les deux autres méthodes connues précitées sont purement géométriques.

En stéréovision, on exploite la parallaxe entre deux caméras regardant sensiblement dans la même direction, et espacées de 20 à 30 cm. De façon très comparable à la vision humaine, le décalage latéral d'un même point vu par les deux caméras est directement lié à la distance de ce point par rapport à chacune des deux caméras. Cette solution nécessite deux caméras, et généralement un éclairage contrôlé. Pour établir la correspondance entre les positions des points caractéristiques de l'objet dans les deux images, on peut utiliser l'analyse d'objet réalisée par le logiciel de traitement d'images, mais il est souvent très utile, voire nécessaire, d'ajouter un éclairage structuré, comme un laser, pour pouvoir reconnaitre et localiser sans ambiguïté les points de correspondance entre les deux images.

Avec un profilomètre laser, on exploite aussi une parallaxe, cette fois entre la direction d'éclairage et la direction de détection. Une seule caméra est nécessaire et cette solution est donc sensiblement plus simple que la stéréovision.

Néanmoins, un risque commun à ces deux solutions géométriques est lié aux effets d'ombrage et de masquage : pour une bonne détection, le point d'objet considéré doit être en vue directe (ligne de visée libre d'obstacles) de la source d'éclairage et de la ou des caméras concernées. A l'évidence, cette condition est mieux satisfaite avec deux lignes de visée (profilomètre laser) qu'avec trois (caméras de stéréovision).

Il en résulte que le profilomètre laser est préféré et est souvent retenu dans le domaine de l'inspection et du tri. On comprend aussi qu'il y a un compromis entre les risques de masquage et la précision de mesure de la hauteur, car tous deux sont croissants avec la parallaxe.

A titre d'exemples, les documents WO2012089185 et WO2019043231 divulguent l'utilisation de profilomètres laser pour mesurer un profil de hauteurs d'objets défilant sur un tapis. Ces documents exploitent le principe qu'avec un éclairage suffisamment intense, même un objet noir ou transparent renvoie un signal significatif et détectable. (En contrepartie, un objet opaque clair renvoie un signal très fort et saturant le capteur). De par son diamètre de faisceau typique de 1 mm environ, un laser collimaté fournit naturellement un tel éclairage.

Le document WO2012089185 en particulier exploite la diffusion de la lumière laser dans la matière et sa résurgence après avoir transitée sous la surface du matériau, avec production d'une image de bande éclairée de largeur variable et aux limites floues, ne permettant qu'un traitement sommaire qui détecte un élargissement de la bande éclairée lié à ce trajet optique. On peut noter que ce fonctionnement impose l'emploi d'un éclairage collimaté (donc d'un laser) pour obtenir une bande éclairante de largeur constante quelle que soit la hauteur de la surface éclairée.

Un inconvénient connu de l'emploi d'un laser est la nécessité de prévoir des mesures de protection et des précautions optiques pour éviter les risques d'éblouissement et de dommages oculaires des opérateurs circulant à proximité de la machine. Il faut donc soigneusement capoter la machine pour éviter tout rebond direct du faisceau laser vers l'extérieur de la machine. Or, lorsque l'on trie des objets hétéroclites et de natures variées, tels que des déchets ménagers, qu'ils soient d'emballage ou d'origine industrielle, de nombreuses surfaces métalliques sont présentes : canettes, films métallisés, revêtements métalliques externes ou internes exposés, pièces métalliques diverses. Ces surfaces métalliques se comportent comme des miroirs quasi parfaits, surtout hors des surfaces peintes.

Or, la voie de passage des objets en défilement doit conserver une hauteur minimale, typiquement de 30 cm sans aucun obstacle, pour éviter tout risque de bourrage. Ces deux contraintes réunies rendent quasi-impossible de garantir l'absence de rebond du faisceau laser vers un point extérieur.

Cette problématique est très similaire à celle rencontrée dans les machines à rayons X, où les solutions retenues pour contenir les radiations utilisent des tunnels de plusieurs mètres de long pour faire circuler les objets, et même des chicanes en entrée de machine : ces solutions sont à l'évidence inapplicables dans le contexte évoqué.

Une solution parfois proposée à ce problème consiste à employer un laser infra-rouge (IR), réputé sans danger pour l'œil humain, car hors de sa zone de sensibilité. Or, le danger de brulure demeure bien entendu, et il est même plus pernicieux, car le laser IR n'étant pas visible, le personnel ne se méfie pas et ne songera pas à prendre de mesure de protection.

La présente invention a pour but de proposer une solution permettant de pallier les inconvénients des solutions d'inspection connues basées sur des profilomètres laser, tout en fournissant des performances similaires en termes de détection et d'inspection d'objets en défilement, en particulier pour les objets noirs et sombres.
A cet effet, elle a pour premier objet un dispositif d'inspection d'objets défilant en flux sensiblement monocouche sur une surface support plane mobile selon une direction longitudinale, ce dispositif comprenant, d'une part, au moins un moyen d'éclairage fournissant un faisceau d'éclairage avec un axe ou plan médian, dirigé vers la surface support et dont l'intersection avec cette surface support consiste en une bande éclairée qui s'étend transversalement à la direction de défilement et sur toute ou partie de la largeur de ladite surface support, d'autre part, au moins un moyen de détection présentant un axe ou un plan optique et un champ d'acquisition présentant, dans la direction transverse à la direction de défilement, une dimension au plus égale à celle de la bande éclairée, et englobant, dans la direction de défilement, également des zones non éclairées de la surface support situées en amont et en aval de la dite bande éclairée et un volume s'étendant au moins au-dessus de ladite bande ou partie de bande éclairée, et éventuellement au-dessus des zones non éclairées, et, enfin, un moyen de traitement et d'évaluation des signaux ou données fourni(e)s par ledit au moins un moyen de détection en vue de détecter la présence des objets défilants, de cartographier leur hauteur et/ou de déterminer leur volume extérieur, ces objets étant préférentiellement de couleur sombre ou noire, l'axe ou le plan médian du ou des faisceau(x) d'éclairage et l'axe ou le plan optique du ou des moyen(s) de détection présentant entre eux un angle non nul, dit angle de parallaxe, et l'image de la bande éclairée acquise par ledit au moins un moyen de détection présentant une largeur au moins égale à trois fois, préférentiellement à au moins dix fois, la résolution dudit moyen,
dispositif caractérisé en ce que ledit au moins un moyen d'éclairage est configuré et arrangé de telle manière que la bande éclairée (6) générée au niveau de la surface support présente une largeur dans la direction de défilement qui est supérieure à 10 mm, avantageusement comprise entre 10 mm et 30 mm, soit délimitée, en l'absence d'objet, par deux bords parallèles rectilignes opposés, qui forment des limites nettes dans l'image de cette bande éclairée, et présente un contraste suffisant par rapport aux zones non éclairées pour être discernable par le moyen de détection et le moyen de traitement et d'évaluation, ce quelle que soit la couleur de l'objet en défilement sur lequel la bande éclairée est appliquée, et en ce que le ou chaque faisceau d'éclairage consiste en un faisceau provenant d'une source de lumière incohérente.

L'invention a aussi pour objets une machine d'inspection et de tri comprenant au moins un tel dispositif et un procédé d'inspection d'objets défilants en flux sur une surface support.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1a] est une vue de côté d'une réalisation préférée du dispositif d'inspection selon l'invention, dans laquelle le moyen de détection (caméra) est situé en amont de l'éclairage et en position basse ;
[Fig. 1b] est une vue de côté similaire à celle de la figure 1a, mais avec le moyen de détection (caméra) situé en amont du moyen d'éclairage et en position haute, tout en restant en dessous de l'éclairage ;
[Fig. 2] est une vue en perspective du dispositif représenté sur la figure 1a ;
[Fig. 3] est une vue en perspective d'une autre réalisation préférée du dispositif selon l'invention, avec le moyen de détection (caméra) situé en aval du moyen d'éclairage et face à lui (du côté opposé d'un plan vertical et transversal par rapport à la surface support) ;
[Fig. 4] est une vue en perspective d'une autre réalisation préférée du dispositif selon l'invention, avec utilisation d'un moyen d'éclairage mobile ;
[Fig. 5] est une vue en perspective montrant l'intersection de la bande éclairée avec un objet rectangulaire défilant sur le plan support ;
[Fig. 6] est une vue dans le plan de la caméra montrant comment l'image de la bande éclairée est modifiée par la présence de l'objet de la figure 5 ;
[Fig. 7] montre le profil de hauteur déduit des informations de la figure 6, et,
[Fig. 8a], [Fig. 8b], [Fig. 8c], [Fig. 8d] [Fig. 8e] et [Fig. 8f] montrent des couples [images instantanées de la bande éclairée/profils de hauteur accumulés] lors de la circulation d'un objet entier à travers le dispositif selon l'invention.

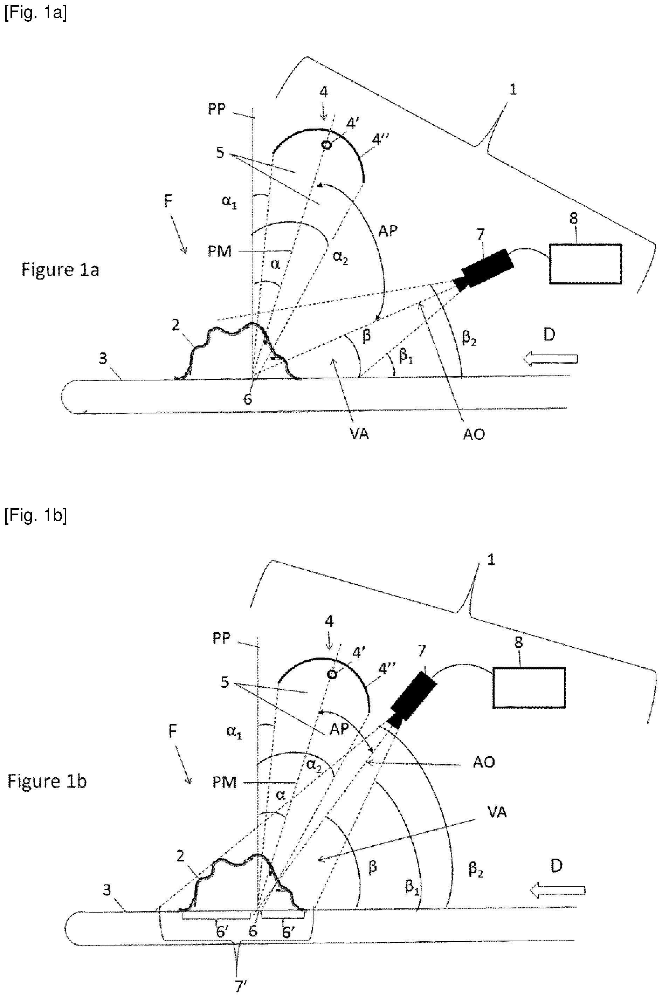

Les figures 1 à 4 illustrent de manière schématique différents modes de réalisation d'un dispositif d'inspection d'objets (2) défilant en flux (F) sensiblement monocouche sur une surface support plane (3) mobile selon une direction (D) longitudinale.

Ce dispositif (1) comprend essentiellement :
d'une part, au moins un moyen d'éclairage (4) fournissant un faisceau d'éclairage (5) avec un axe ou plan médian (PM), dirigé vers la surface support (3) et dont l'intersection avec cette surface support (3) consiste en une bande éclairée (6) qui s'étend transversalement à la direction de défilement (D) et sur toute ou partie de la largeur de ladite surface support (3),
d'autre part, au moins un moyen (7) de détection présentant un axe ou un plan optique (AO) et un champ d'acquisition (7') présentant, dans la direction transverse à la direction de défilement (D), une dimension au plus égale à celle de la bande éclairée (6), et englobant, dans la direction de défilement (D), également des zones non éclairées (6') de la surface support (3) situées en amont et en aval de la dite bande ou partie de éclairée (6) et un volume (VA) s'étendant au moins au-dessus de ladite bande éclairée (6), et éventuellement au-dessus des zones (6') non éclairées, et,
enfin, un moyen (8) de traitement et d'évaluation des signaux ou données fourni(e)s par ledit au moins un moyen de détection (7) en vue de détecter la présence des objets défilants (2), de cartographier leur hauteur et/ou de déterminer leur volume extérieur.

L'axe ou le plan médian (PM) du ou des faisceau(x) d'éclairage (5) et l'axe ou le plan optique (AO) du ou des moyen(s) de détection (7) présentent entre eux un angle (AP) non nul, dit angle de parallaxe. De plus, l'image de la bande éclairée (6) acquise par ledit au moins un moyen de détection (7) présente une largeur au moins égale à trois fois la résolution dudit moyen (7), et préférentiellement à au moins dix fois cette résolution.

Par l'expression « n fois la résolution », on entend dans la présente une valeur de largeur équivalente à n fois la dimension du composant ou de l'unité élémentaire de détection. Ainsi, pour un moyen de détection matriciel, comme par exemple une caméra ou un moyen de prise d'images analogue, l'image de la bande (6) présentera une largeur d'au moins trois pixels (bande formée par au moins trois lignes de pixels).

En tout état de cause, dans la pratique, la largeur de la bande éclairée (6) au niveau de la surface support (3), c'est-à-dire la distance séparant les deux bords limitrophes (9, 9'), devrait être suffisante pour pouvoir différencier aisément et distinguer nettement ces deux bords afin de pouvoir avantageusement exploiter les informations fournies séparément par chacune d'elles. Les inventeurs ont pu déterminer par différents essais que la bande éclairée (6) formée sur la surface support mobile (3) devait présenter une largeur, dans la direction de défilement (D), supérieure à 10mm, avantageusement comprise entre 10 mm et 30 mm, préférentiellement de l'ordre d'environ 20mm. Une largeur plus importante nécessiterait quant à elle une puissance d'éclairage exagérée pour disposer d'un contraste suffisant.

Ainsi, conformément à l'invention, ledit au moins un moyen d'éclairage (4) est configuré et arrangé de telle manière que la bande éclairée (6) générée au niveau de la surface support (3) présente une largeur dans la direction de défilement (D) qui est supérieure à 10 mm, avantageusement comprise entre 10 mm et 30 mm, soit délimitée, en l'absence d'objet (2), par deux bords parallèles rectilignes opposés (9, 9'), qui forment des limites nettes dans l'image de cette bande éclairée (6), et présente un contraste suffisant par rapport aux zones non éclairées (6') pour être discernable par le moyen de détection (7) et le moyen (8) de traitement et d'évaluation, ce quelle que soit la couleur de l'objet (2) en défilement sur lequel la bande éclairée (6) est appliquée. De plus, le ou chaque faisceau d'éclairage (5) consiste en un faisceau provenant d'une source de lumière incohérente (4') Grâce aux dispositions de l'invention, il est donc possible de s'affranchir des inconvénients et risques liés à la mise en œuvre de profilomètres laser, tout en fournissant des performances similaires en termes de détection et de cartographie d'objets (2) en défilement, en particulier aussi pour les objets noirs, sombres et transparents.

La notion d'objet sombre ou noir peut être caractérisée par une luminosité inférieure à un seuil de réflectance exprimé en pourcentage de la réflectance d'un objet blanc de référence (par exemple une céramique blanche ou une feuille de papier blanc de bureau). Les valeurs typiques se situent entre 2% et 10 % de réflectance, pour un objet perçu comme noir par l'œil humain.

Comme indiqué ci-dessus, la délimitation latérale de la bande éclairée (6) et sa luminosité sont avantageusement telles que la zone qu'elle définit présente deux limites linéaires nettes (9, 9'), au-delà desquelles l'intensité lumineuse chute brusquement, par exemple de 50% au moins, avantageusement de 60% à 80 % au moins. Ce contraste d'un facteur de 2 à 5 est suffisant pour permettre une distinction nette entre un objet (2) éclairé, même sombre ou noir, et une portion de surface support (convoyeur) non éclairée (généralement de couleur noir, marron ou gris sombre).

Lorsque l'on s'éloigne dudit convoyeur vers le haut (à distance de la surface support), et donc du point focal (ligne de focalisation transversale), la zone éclairée s'élargit : néanmoins ses limites restent nettes et clairement indentifiables dans l'image de la bande éclairée (6). Le dispositif (1) reste donc performant jusqu'à environ 10 cm de hauteur, ce qui est généralement largement suffisant pour une détection de présence, et même pour une mesure de hauteur, car 99 % des objets (2) circulant sur le convoyeur ont moins de 10 cm de haut dans le cadre de l'application préférentielle de l'invention (traitement de déchets ménagers et industriels).

L'homme du métier peut considérer par équivalence qu'il s'agit d'un type d'éclairage structuré à deux lignes de détection (9 et 9'), au lieu d'une ligne dans le cas d'un laser : les deux « lignes » étant constituées par les frontières ou bords linéaires entre la zone fortement éclairée (bande éclairée) et l'extérieur (notamment les bandes immédiatement voisines latéralement et non éclairées). L'information fournie est donc plus riche (doublement de l'information recueillie) que celle résultant de l'exploitation d'un faisceau laser réfléchi.

L'homme du métier comprend également qu'en fonction de la largeur de la surface support mobile (3) et des caractéristiques dimensionnelles/performances des moyens 4 et 7, le dispositif (1) peut comprendre un ou plusieurs moyens d'éclairage (4) et/ou un ou plusieurs moyens de détection (7), arrangés respectivement côte à côte, ce afin de pouvoir appréhender la totalité de cette largeur à des fins d'inspection d'objets (2).En tout état de cause, le champ d'acquisition du ou de chaque moyen d'acquisition (7) est compris en totalité dans l'emprise de la bande éclairée (6) dans la direction (D), comme indiqué ci-dessus.

Avantageusement, l'angle de parallaxe (AP) est supérieur à 10°, et est préférentiellement compris entre 10° et 50°, le moyen d'éclairage (4) et le moyen de détection (7) étant situés du même côté ou non d'un plan (PP) perpendiculaire à la surface support (3) et parallèle à la bande éclairée (6) (voir figures 1 à 4).

Bien entendu, le moyen de détection (7) peut être constitué de plusieurs, voire de multiples composantes dont les signaux sont regroupés avant leur exploitation par le moyen (8).

Toutefois de manière avantageuse, le dispositif (1) comprend un unique moyen de détection (7).

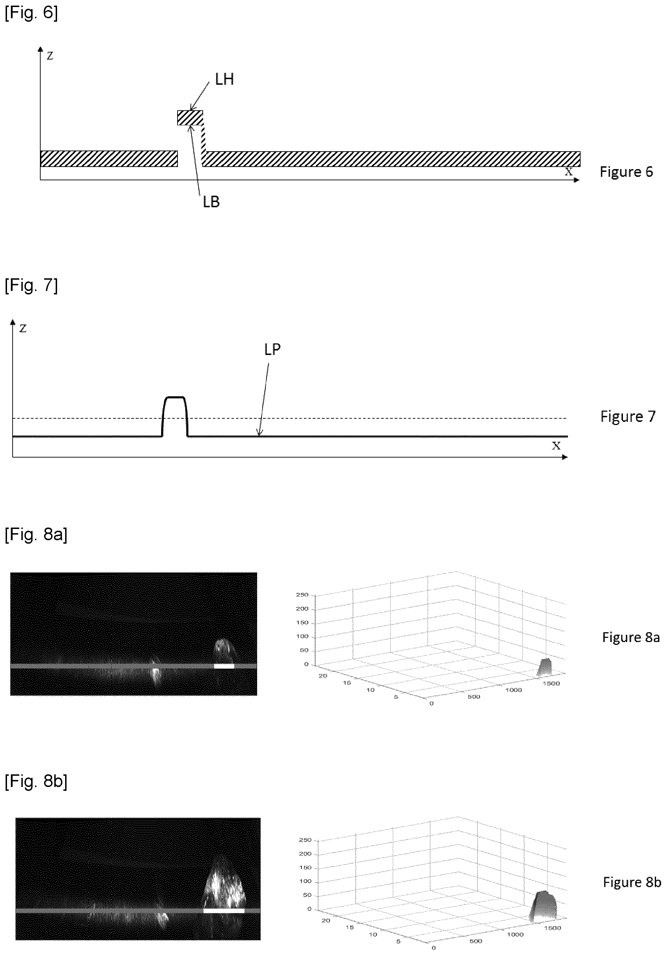

Le ou chaque moyen de détection (7) consiste préférentiellement en une caméra matricielle, la représentation exploitée de la bande éclairée (6) au niveau du moyen de détection (7) et/ou du moyen de traitement et d'évaluation (8) consistant avantageusement en une ligne, s'étendant préférentiellement, en l'absence d'objet (2) impacté par la bande éclairée (6), dans la partie inférieure de l'image fournie par le moyen de détection (7) et analysée par le moyen de traitement et d'évaluation (8), comme représenté par exemple sur la figure 7.

Préférentiellement, le ou chaque moyen d'éclairage (4) comprend au moins une source de lumière (4'), à constitution allongée et arrangée transversalement à la direction de défilement (D), voire plusieurs sources de ce type alignées transversalement. Il comprend également au moins un élément (4") focalisant le rayonnement émis par la source de lumière (4') pour générer la bande éclairée (6) au niveau de la surface support (3).

Conformément à une première variante constructive, ressortant des figures 1 à 3, le ou chaque moyen d'éclairage (4) fournit un éclairage permanent au niveau de la bande (6) et comprend au moins une source de lumière (4') sous la forme d'un filament rectiligne (par exemple d'une lampe halogène) s'étendant transversalement à la direction de défilement (D) et un élément focalisant (4") sous la forme d'un réflecteur à section partiellement cylindro-elliptique, le filament (4') étant disposé à l'un des foyers de l'ellipse virtuelle du réflecteur (4") et l'autre foyer étant situé au voisinage de la surface support (3).

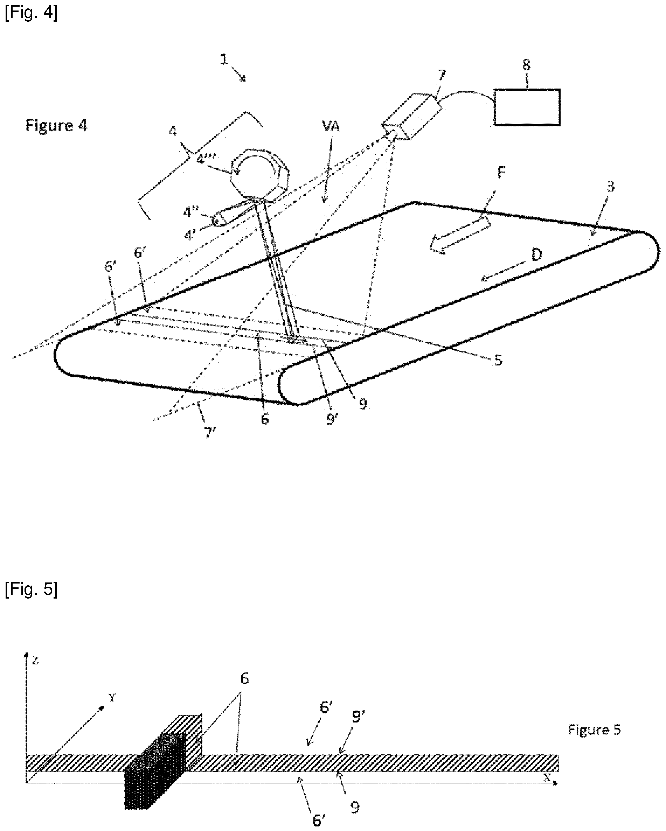

Conformément à une seconde variante constructive, ressortant de la figure 4, le ou chaque moyen d'éclairage (4) fournit un éclairage balayant au niveau de la bande éclairée (6) et comprend une source de lumière (4') fixe, sous la forme d'un filament par exemple, associée à un élément focalisant (4"), sous la forme d'un réflecteur à section partiellement elliptique par exemple, ledit moyen d'éclairage (4) comprenant en outre un élément de transmission (4"'), par exemple mobile, appliquant l'éclairage provenant de la source (4') et focalisé au niveau de la surface support (3) de manière à générer la bande éclairée (6) par balayage transversal.

La génération d'une bande éclairée (6) présentant des caractéristiques géométriques et de luminosité suffisantes pour un fonctionnement fiable du dispositif (1) requiert dans le cadre de la construction et le montage des composants du ou de chaque moyen d'éclairage (4) la prise en considération de points et de critères particuliers, notamment en relation avec la focalisation du rayonnement incohérent et multidirectionnel issu de la source (4') et dans le but d'obtenir des bords (9, 9') rectilignes et droits au niveau de la bande. Cette dernière ou plutôt l'image de cette dernière peut être théoriquement limitée en largeur à une dimension minimale équivalente à trois lignes de pixels dans l'image acquise par la caméra (7), mais présente dans la pratique une largeur d'au moins 10 lignes de pixels, et physiquement une largeur d'une ou de plusieurs dizaines de millimètres, préférentiellement d'au moins 20mm.

Ainsi, en ce qui concerne le problème du flou de mise au point, il y a lieu de relever que la bande éclairée (6), dans sa dimension parallèle à la direction (D) d'avancement du convoyeur, est l'image agrandie du filament de la lampe -source (4') - située au premier foyer de l'ellipse virtuelle du réflecteur cylindro-elliptique (4") associé. Si ce filament est décentré par rapport au foyer, l'image devient floue.

De plus, pour ce type de lampe, le filament vu dans la dimension transverse au convoyeur, a une forme de guirlande soutenue par des supports (5 à 7 par filament). Cette forme s'incurve et s'éloigne du foyer, d'autant plus qu'il est chauffé et donc dilaté. Les images créées par les différentes portions du filament se brouillent donc sensiblement.

Enfin, il faut également noter que les deux bords latéraux du ou de chaque réflecteur (4") sont des tôles planes. Elles sont positionnées perpendiculairement à la bande éclairée (6) et renvoient vers cette bande les rayons reçus du filament (4'). L'homme du métier comprend qu'il y a donc lieu d'attacher un soin particulier à leur conception (pièce rigide), et à leur fixation parfaitement perpendiculaire.

Grâce à la structure des réflecteurs elliptiques ou cylindro-elliptiques (4"), le faisceau d'éclairage (5) émis par le moyen (4) se compose de deux parties distinctes cumulatives fournissant deux zones d'éclairage mutuellement chevauchantes au niveau de la surface support (3), à savoir :
- Une zone d'éclairage focalisé dans la direction d'avancement ou de défilement (D) des objets (2), présentant une forte densité : elle est fournie par les rayons passant par un réflecteur cylindro-elliptique (4"), et correspond à l'image agrandie du filament du tube halogène employé. Dans la direction transverse au tapis ou convoyeur correspondant à la surface support plane mobile (3), le faisceau s'étale sur toute la largeur.
- Une zone d'éclairage direct autour de la zone précédente, liée aux rayons arrivant en ligne directe du filament de la lampe halogène (4') employée. La densité maximale de cette partie est de moins de 1 % de la densité de la précédente. Avec un réglage de sensibilité approprié de la caméra (7), on peut négliger cette composante d'éclairage par rapport à la partie focalisée précédente.

Des moyens d'éclairage (4) pouvant être utilisés dans le cadre de la présente invention ont déjà été évoqués dans les documents EP 1 243 350 et EP 3 423 202 en relation avec une exploitation de la composition spectrale du rayonnement réfléchi pour effectuer un tri matière (spectroscopie proche infrarouge). Le dispositif d'inspection (1) selon l'invention peut donc être intégré à moindre coût dans le type de machines décrites dans ces documents et déjà commercialisées par la demanderesse, puisque le moyen d'éclairage (4) pourra être commun aux deux moyens de détection distincts mis en œuvre, et l'exploitation des signaux recueillis peut avantageusement être réalisée par le même moyen de traitement et d'évaluation (8).

La présente invention a également pour objet un procédé d'inspection d'objets (2) défilant en flux (F) sensiblement monocouche sur une surface support plane (3) mobile selon une direction (D) longitudinale.

Ce procédé est réalisé par mise en œuvre d'un dispositif (1) comprenant, d'une part, au moins un moyen d'éclairage (4) fournissant un faisceau d'éclairage (5) avec un axe ou plan médian (PM), dirigé vers la surface support (3) et dont l'intersection avec cette surface support (3) consiste en une bande éclairée (6) qui s'étend transversalement à la direction de défilement (D) et sensiblement sur toute la largeur de ladite surface support (3), d'autre part, au moins un moyen (7) de détection présentant un axe ou un plan optique (AO) et un champ d'acquisition (7') englobant au moins la bande éclairée (6), des zones non éclairées (6') de la surface support (3) situées de part et d'autre le long de la dite bande éclairée (6) et un volume (VA) s'étendant au moins au-dessus de ladite bande éclairée (6), et éventuellement au-dessus des zones (6') non éclairées, et, enfin, un moyen (8) de traitement et d'évaluation des signaux ou données fourni(e)s par ledit au moins un moyen de détection (7) en vue de détecter la présence des objets défilants (2), de cartographier leur hauteur et/ou de déterminer leur volume extérieur.

Ce dispositif (1) est configuré de telle manière que l'axe ou le plan médian (PM) du faisceau d'éclairage (5) et l'axe ou le plan optique (AO) présentent entre eux un angle (AP) non nul, dit angle de parallaxe et ledit procédé consiste à fournir, d'une part, une image de la bande éclairée (6) acquise par ledit au moins un moyen de détection (7) qui présente une largeur au moins égale à trois fois la résolution dudit moyen (7) et, d'autre part, une bande éclairée (6) au niveau de la surface support (3) qui est délimitée par deux bords parallèles rectilignes opposés(9, 9') mutuellement différentiables dans l'image, qui présente une largeur dans la direction de défilement (D) qui est supérieure à 10 mm, avantageusement comprise entre 10 mm et 30 mm, et qui présente un contraste suffisant par rapport aux zones non éclairées (6') pour être discernable par le moyen de détection (7) et exploitable par le moyen (8) de traitement et d'évaluation , ce quelle que soit la couleur de l'objet (2) en défilement sur lequel la bande éclairée (6) est appliquée, le ou chaque faisceau d'éclairage consistant en un faisceau provenant d'une source de lumière incohérente.

Selon une caractéristique de l'invention, il peut être prévu d'extraire de l'image de la bande éclairée (6), par l'intermédiaire d'au moins un programme de traitement de données adéquat exécuté par le moyen (8) de traitement et d'évaluation, au moins une ligne de profil (LP) représentant l'altitude par rapport à la surface support mobile (3) et à comparer cette ligne de profil à une valeur seuil minimale de présence d'objet, et le cas échéant à exploiter cette ligne de profil pour déterminer point par point la hauteur des objets (2) inspectés.

Selon une autre caractéristique, il peut en outre être prévu d'analyser la luminance des lignes de profil (LP) successives d'un objet (2) et l'exploiter pour réaliser un classement dudit objet (2) en objet sombre ou objet clair.

Enfin, il peut aussi être prévu de réaliser une accumulation dans le temps des lignes de profil (LP) successives d'un même objet (2) pour en reconstituer la forme apparente et/ou en calculer le volume.

Avantageusement, le programme de détection de profil appliqué par le moyen (8) de traitement et d'évaluation peut mettre en œuvre une recherche de percentile de luminance détectée le long de chaque ligne perpendiculaire à l'image de la bande éclairée (6), suivie d'une opération de seuillage de la ligne de profil.

En relation avec une variante de réalisation, le moyen (8) de traitement et d'évaluation peut mettre en œuvre deux opérations de détection de profil permettant de rechercher et d'exploiter deux limites, à savoir les intersections haute et basse de la bande éclairée (6) avec l'objet (2) présent, autrement ment dit les deux bords (9 et 9') de l'image de ladite bande éclairée (6).

Le procédé peut ainsi consister à déterminer un premier profil en suivant une limite haute (LH) définie par un premier angle (α1), par exemple un premier bord de la bande éclairée dans la direction de défilement, et un second profil en suivant une limite basse (LB) définie par un second angle (α2), par exemple un second bord de la bande éclairée dans la direction de défilement, ces deux limites (LH, LB) correspondant aux deux bords (9, 9') précités de la bande éclairée (6) projetée sur l'objet (2), et étant décalés dans le temps avec le défilement de l'objet (2) inspecté.

Préférentiellement, les deux opérations précitées sont distinctes et mises en œuvre séparément, les deux profils étant déterminés indépendamment l'un de l'autre.

Préférentiellement également, le procédé précité met en œuvre un dispositif d'inspection (1) tel que décrit précédemment.

Enfin, l'invention porte également sur une machine d'inspection et de tri automatique d'objets (2) défilant en flux (F) sensiblement monocouche sur un convoyeur, du type bande transporteuse par exemple, fournissant une surface support mobile (3) pour lesdits objets (2), cette machine étant caractérisée en ce qu'elle comprend, monté au-dessus du convoyeur, au moins un dispositif d'inspection (1) tel que décrit précédemment.

Eventuellement, plusieurs (au moins deux) dispositifs (1) peuvent être prévus comprenant soit un moyen d'éclairage (4) commun et au moins deux moyens de détection (7) distincts, soit un moyen de détection (7) commun et au moins deux moyens d'éclairage (4) distincts ou encore correspondant à au moins deux modules distincts comprenant chacun un moyen d'éclairage (4) et un moyen de détection (7), arrangés côte à côte transversalement à la direction de défilement (D).

Une description plus détaillée de différentes variantes de réalisation de l'invention est présentée ci-après en relation avec les figures annexées.

En se référant tout d'abord à la figure 1a, on relève un moyen d'éclairage (4) avec une source (4'), à savoir un luminaire (4) à réflecteur focalisé (4") et tube halogène (4'), appelé ci-après « réflecteur halogène », qui concentre l'énergie lumineuse sur une bande éclairée étroite (6) de la surface du convoyeur (3) qui transporte les objets (2) à inspecter. Les rayons arrivent selon un angle moyen α par rapport à la verticale à la surface support plane mobile (3) de convoyage, le faisceau (5) étant délimité par les angles extrêmes α1 et α2. Une caméra matricielle (7) est placée dans ce cas en amont de la zone éclairée en forme de bande (6) et dirigée vers le convoyeur, avec un angle moyen β (de son axe optique AO) par rapport à l'horizontale (surface plane du convoyeur). Les extrémités basse et haute de son champ de vision ou volume d'acquisition (VA) correspondent aux angles β1 et β2.

Par rapport à un profilomètre laser, la différence principale réside dans le fait que l'éclairage n'est pas seulement concentré selon la direction α, mais qu'il remplit tout le secteur angulaire allant de α1 à α2. La largeur de cette bande éclairée (6) dépend de la hauteur variable (au-dessus du convoyeur) de sa surface d'application (surface du convoyeur ou surface d'un objet), mais ses deux limites (9 et 9') restent bien nettes et détectables par la caméra (7) dans la plage de hauteurs précitées.

Cette bande éclairée (6) par éclairage focalisé est combinée fonctionnellement avec une caméra matricielle (7) pour constituer un système de triangulation capable de détecter et cartographier tous les objets (2), mêmes noirs, sombres et inertes spectralement, qui se présentent sur le convoyeur et traversent ladite bande éclairée.

Un tel dispositif (1) présente plusieurs avantages en termes de coûts et d'intégration : une seule caméra par dispositif, pas d'éclairage spécifique et pas de surcoût de capotage (car pas de source laser).

Enfin, et bien qu'il ne soit pas représenté ici, la machine peut comprendre, en plus du moyen de détection (7) du dispositif (1), un autre détecteur placé lui dans le plan de détection de direction α, entre deux réflecteurs (4"), pour constituer un système de détection coplanaire avec l'éclairage et incliné sur la verticale, comme décrit dans le document EP 1 243 350 précité.

La parallaxe moyenne du dispositif (1) est donnée par l'écart entre les deux lignes de visée, soit ici l'angle AP = π/2 - α-β. Plus cet angle est grand, plus la mesure de hauteur est précise, mais plus on maximise aussi les risques de masquage selon la forme de l'objet (2) apparent.

Avantageusement, les valeurs choisies pour α vont de 0 à 30°, et pour β de 30 à 75°.

La figure 1a illustre une valeur de β proche de 30° (position « amont basse »), et la figure 1b une position « amont haute » avec β proche de 75°.

Plusieurs autres mises en oeuvre préférentielles du dispositif (1) utilisent des agencements géométriques différents, sans sortir du champ de l'invention.

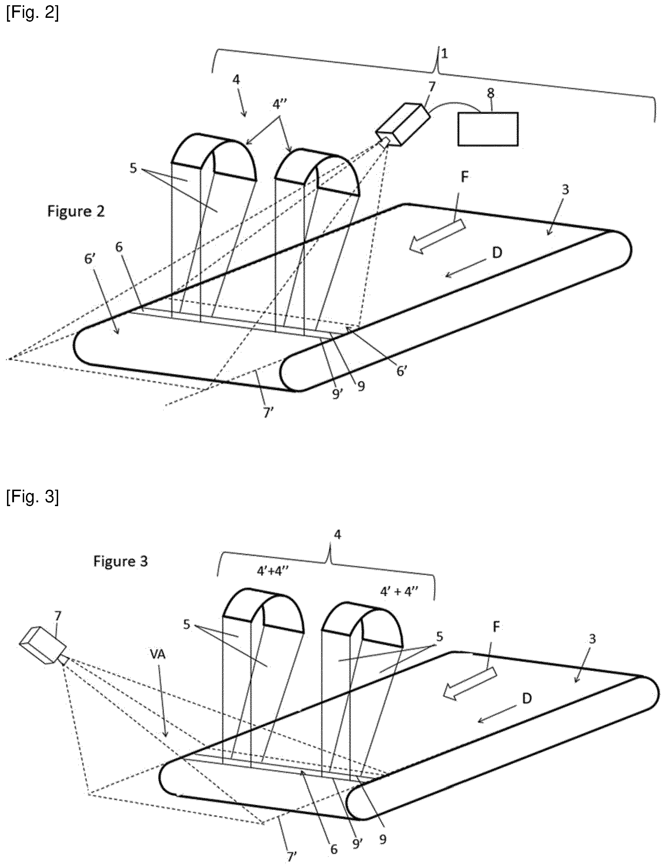

Ainsi, deux positions possibles pour la caméra peuvent être envisagées, et sont illustrées en perspective sur les figures 2 et 3 :

Sur la figure 2 est illustrée une position « amont basse » : une configuration pour laquelle l'angle entre l'axe de visée de la caméra et la verticale est important. Cette position est aussi celle présentée sur la figure 1a. On peut dans ce cas conserver un degré de liberté de déplacement de la caméra dans la direction horizontale et cette variante présente une bonne précision de la mesure d'altitude. Toutefois, elle peut aussi produire un effet de masquage des objets : un objet en amont peut masquer un objet au niveau de la bande éclairée (6).

Sur la figure 1b est illustrée un exemple de position « amont haute » : dans ce cas la caméra (7) est installée juste sous le moyen d'éclairage (4), et le plus près possible. On minimise ainsi la parallaxe, ce qui a pour avantage de réduire l'effet de masquage réduit par rapport à la configuration précitée, mais réduit la précision en altitude réduite par rapport à cette dernière.

On relève que sur les figures 1 et 2, le moyen d'éclairage est composé de deux réflecteurs halogènes (4' + 4") qui sont mutuellement espacés dans le sens transversal. Cette configuration possible n'est pas forcément nécessaire, et le fonctionnement du dispositif (1) serait identique avec une ligne continue de réflecteurs (4' + 4") jointifs couvrant toute la largeur du convoyeur (3). En effet, avec une parallaxe (angle AP) suffisante, le champ de vue (VA) de la caméra (7) est entièrement situé sous la limite basse des réflecteurs (4") et n'interfère pas avec eux.

La figure 3 illustre un exemple de position dite « aval » correspondant à une configuration haute regardant vers l'arrière (dans le sens contraire de la direction de défilement D du flux F), avec un degré de liberté possible de la caméra (7) dans la direction verticale. Cette variante constructive présente un effet de masquage réduit entre objets (2), ce grâce à la chute entamée des objets en bout de convoyeur, mais fait l'objet d'une exposition supérieure à l'encrassement dû au système d'éjection des déchets situé directement en dessous à l'extrémité du convoyeur.

Enfin, la figure 4 illustre une configuration utilisant un moyen d'éclairage (4) mobile qui présente les mêmes caractéristiques que les moyens d'éclairage fixes des figures 1 à 3. Un éclairage de ce type est par exemple décrit dans le document WO 2013/115650.

Comme le montre la figure 4, le rayonnement d'une source (4') comprenant une lampe à incandescence, par exemple halogène, est focalisé au moyen d'un réflecteur convergent (4"), ou au moyen d'une lentille, et est projeté sur un miroir tournant (4"') qui envoie à tout instant la lumière focalisée sur une zone rectangulaire élémentaire, laquelle balaye une bande éclairée (6) au niveau de la surface support plane mobile (3). Cette bande est naturellement délimitée par les limites de la face miroir qui renvoie le faisceau d'éclairage de la lampe (4'). Pour un bon fonctionnement du dispositif (1) de la figure 4, il est souhaitable d'avoir un contraste maximum au niveau des bords (9 et 9'). Cette condition est satisfaite si le faisceau convergent (5) issu de la lampe 6 intersecte les bords hauts et bas de la face miroir. On obtient ainsi, comme dans les solutions présentées plus haut, deux limites nettes de la bande éclairée, même si elles sont sensiblement plus éloignées que celles de la bande obtenue par les variantes des figures 1 à 3.

En l'absence d'objet (2), la bande éclairée (6) apparait comme une bande horizontale dans l'image de la caméra (7). Le champ de vue (VA) de la caméra doit être ajusté afin que cette bande soit visible dans la moitié inférieure de l'image.

En outre, et de manière connue de l'homme du métier, le temps d'exposition et/ou le diaphragme de la caméra (7) sont ajustés afin de ne pas saturer au niveau de la ligne d'éclairage et sur les objets noirs non brillants. On peut également ajouter un filtre au niveau de l'objectif afin d'adapter la plage d'intensité lumineuse à la dynamique de sensibilité de la caméra.

Au passage d'un objet (2), la position de la représentation de la bande éclairée (6) dans l'image est modifiée comme illustré sur la figure 5 (la direction Y représente la direction d'avancement ou de défilement D de la surface support mobile du convoyeur 3).

Dans l'image mesurée, la donnée collectée utile est de la forme indiquée sur la figure 6.

Un premier programme de détection de profil (par exemple par une technique de segmentation d'image) recherche la position du maximum de signal colonne par colonne. Ce maximum est normalement situé dans la zone d'intersection de la bande éclairée (6) avec l'objet (2).

Afin de rendre ce traitement plus robuste, et comme évoqué précédemment, on peut remplacer cette recherche de maximum par une recherche de percentile colonne par colonne. En effet, la valeur maximale présente le risque d'être perturbée par différents phénomènes (pixels morts au niveau du capteur de la caméra, points de brillance dans l'image...). Comme la bande éclairée (6) est relativement large (par exemple par rapport à un faisceau laser) et mesurable sur au moins plusieurs pixels de large dans l'image, l'utilisation d'un percentile élevé permet de s'affranchir de ce type de biais de mesure. Les valeurs ciblées pour ce percentile se situent entre 80 et 100 % (100 % correspondant au maximum). La ligne de profil ainsi calculée par ce premier programme correspond à un vecteur contenant autant d'éléments que de colonnes dans l'image. Les valeurs de ce vecteur sont exprimées en numéros de pixel, et une modélisation géométrique simple montre que ce numéro est sensiblement proportionnel à l'altitude des objets éventuels par rapport au niveau de la surface support du convoyeur (3). Une opération de seuillage de cette ligne de profil est ensuite effectuée afin d'isoler les objets (2) du reste du reste de la surface support (3). Une fois traité, le signal de profil (ligne de profil LP) a la forme illustrée sur la figure 7.

Sur ce schéma, la ligne pleine représente la ligne de profil mesurée sur l'image et la ligne pointillée la position du seuil à partir duquel on considère qu'un objet (2) est détecté.

Un calcul de triangulation connu de l'homme du métier détermine, à partir des angles de la figure 1a et des distances entre la caméra (7), le moyen d'éclairage (4) et la surface support du convoyeur (3), la hauteur de l'objet (2) en ce point. Cette hauteur est sensiblement proportionnelle à la position verticale de la bande, exprimée en pixels, et comptée à partir de la position de cette bande en l'absence d'objet (ligne zéro).

La hauteur minimale détectable correspond théoriquement à un décalage d'au moins un pixel par rapport à la ligne zéro, et un minimum fiable est obtenu pour deux pixels de décalage. Dans la réalisation préférée, elle est de 1 à 3 mm en fonction de la résolution du moyen de détection (7) - caméraemployé.

Par le biais des résultats des opérations effectuées par les programmes de calcul précités mis en œuvre par le moyen de traitement et d'évaluation (8), on peut distinguer tous les objets (2) d'altitude supérieure à un seuil prédéfini.

Le premier service rendu par le dispositif (1) est donc la détection de présence de tout objet (2) présentant une hauteur minimale.

La mise en œuvre d'un deuxième programme de détection de profil peut être prévue (avantageusement en plus du premier programme), lequel aura pour but de rechercher deux limites, à savoir les intersections haute et basse de la bande éclairée avec l'objet (2) présent. Ces informations supplémentaires peuvent être exploitées pour disposer d'une certaine redondance, et donc d'un diagnostic plus précis sur la forme de l'objet (2) inspecté. Par exemple, dans la figure 1a, il est alors possible de déterminer le profil aussi bien en suivant la limite haute LH définie par l'angle α1, que par le défilement de la limite basse LB définie par l'angle α2, ces deux limites correspondant aux bords (9, 9') de la bande éclairée (6) projetée sur l'objet (2). On obtient ainsi deux profils décalés dans le temps avec le défilement de l'objet (2) inspecté. Le fait de disposer de deux profils calculés indépendamment augmente la précision moyenne. De plus, les instants d'entrée et de sortie de l'objet (2) dans chaque limite sont différents. Il est dans ce cas possible de mesurer plus facilement des portions verticales d'objets (bord d'un carton), ou de s'affranchir des effets de masquage par un objet situé en amont de celui d'intérêt.

Comme cela ressort de la figure 4, une telle double détection des deux limites basse et haute de la bande éclairée peut également être réalisée avec des angles α1 et α2 identiques.

Il peut aussi être envisagé de distinguer deux classes distinctes parmi les objets (2) inspectés, ce en fonction de l'intensité (ou luminance) des pixels correspondants à la ligne de profil enregistrée, à savoir : une classe sombre qui inclut les pixels de la ligne de profil de luminance inférieure à un seuil prédéfini (voir définition ci-dessus), et une classe claire qui inclut les pixels de la ligne de profil de luminance supérieure à ce même seuil.

En pratique, les pixels des objets clairs ont une valeur élevée alors que ceux des objets sombres ont une valeur faible. La distinction entre objets clairs et objets sombres est donc réalisable par l'intermédiaire des 2 seuillages décrits précédemment (le 1er pour la détection d'objet agissant sur l'altitude et le 2ème pour la distinction entre clairs et sombres agissant sur l'intensité des pixels). A noter que les objets sombres qui présentent des points de brillance seront potentiellement vus comme des objets clairs avec ce type de traitement.

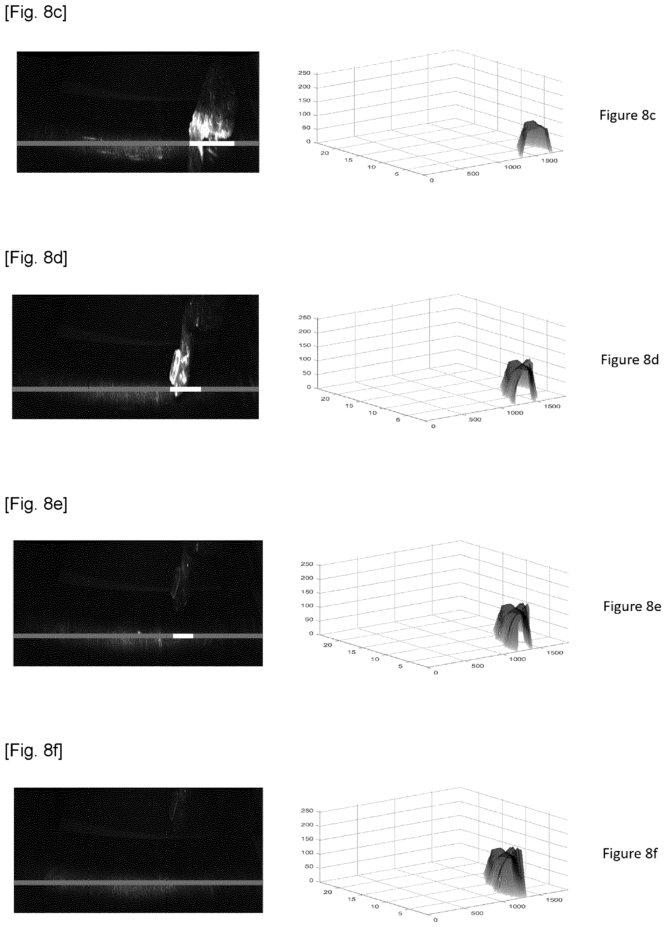

Les inventeurs ont procédé à des essais de fonctionnement d'un prototype du dispositif et de la machine précités et les résultats de ces essais, indiqués à titre d'exemples dans les figures 8a à 8f, montrent qu'on peut obtenir un profil de hauteur quasi complet d'un objet (2) en défilement, ici une bouteille.

Ces figures montrent le processus de formation d'une accumulation temporelle de profils mesurés. L'axe temporel est représenté virtuellement de haut en bas dans la figure (les images en haut de la figure correspondent à des prises de vue antérieures à celles en dessous). La dernière image de chaque séquence enregistrée par la caméra est montrée sur la partie gauche de cette figure. L'interprétation de la ligne de profil est superposée à ces images :
La ligne grise correspond à une ligne de profil inférieure au seuil de déclenchement de la détection d'un objet ;
Les portions de cette ligne représentées en blanc correspondent aux positions pour lesquelles le seuil de détection objet est dépassé.

La partie droite de chacune des figures 8a à 8f illustre le relief ainsi calculé et accumulé sur une vingtaine de mesures temporelles successives. Le relief est exprimé en pixels sur cette figure.

Dans le profil final obtenu (figure 8f), les seuls éléments surfaciques manquants sont les points non visibles en ligne directe simultanément par le moyen de détection (7) -caméra- et le moyen d'éclairage (4) -ensemble lampe halogène + réflecteur-, comme ceux situés en surplomb (face inférieure de la bouteille).

Le fait de disposer d'un profil complet des hauteurs (les valeurs de Z pour toutes les positions X, Y de l'objet dans l'image), permet de reconstituer une cartographie du volume extérieur de l'objet (2) inspecté. On peut ainsi calculer son volume.

Cela permet aussi de repérer, dans les profils, les « vallées » entre deux objets (2) en contact : un programme adapté peut alors rechercher le minimum local de hauteur pour aider à segmenter un groupe d'objets adjacents en objets (2) individuels.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) d'inspection d'objets (2) défilant en flux (F) sensiblement monocouche sur une surface support plane (3) mobile selon une direction (D) longitudinale, ce dispositif (1) comprenant, d'une part, au moins un moyen d'éclairage (4) fournissant un faisceau d'éclairage (5) avec un axe ou plan médian (PM), dirigé vers la surface support (3) et dont l'intersection avec cette surface support (3) consiste en une bande éclairée (6) qui s'étend transversalement à la direction de défilement (D) et sur toute ou partie de la largeur de ladite surface support (3), d'autre part, au moins un moyen (7) de détection présentant un axe ou un plan optique (AO) et un champ d'acquisition (7') présentant dans la direction transverse à la direction de défilement (D) une dimension au plus égale à celle de la bande éclairée (6), et englobant, dans la direction de défilement (D), également des zones non éclairées (6') de la surface support (3) situées en amont et en aval de la dite bande éclairée (6) et un volume (VA) s'étendant au moins au-dessus de ladite bande ou partie de bande éclairée (6), et éventuellement au-dessus des zones (6') non éclairées, et, enfin, un moyen (8) de traitement et d'évaluation des signaux ou données fourni(e)s par ledit au moins un moyen de détection (7) en vue de détecter la présence des objets défilants (2), de cartographier leur hauteur et/ou de déterminer leur volume extérieur, ces objets (2) étant préférentiellement de couleur sombre ou noire, l'axe ou le plan médian (PM) du ou des faisceau(x) d'éclairage (5) et l'axe ou le plan optique (AO) du ou des moyen(s) de détection (7) présentant entre eux un angle (AP) non nul, dit angle de parallaxe, et l'image de la bande éclairée (6) acquise par ledit au moins un moyen de détection (7) présente une largeur égale à au moins trois fois, préférentiellement à au moins dix fois, la résolution dudit moyen (7),
dispositif (1) **caractérisé en ce que** ledit au moins un moyen d'éclairage (4) est configuré et arrangé de telle manière que la bande éclairée (6) générée au niveau de la surface support (3) présente une largeur dans la direction de défilement (D) qui est supérieure à 10 mm, avantageusement comprise entre 10 mm et 30 mm, soit délimitée, en l'absence d'objet (2), par deux bords parallèles rectilignes opposés (9, 9'), qui forment des limites nettes dans l'image de cette bande éclairée (6), et présente un contraste suffisant par rapport aux zones non éclairées (6') pour être discernable par le moyen de détection (7) et le moyen (8) de traitement et d'évaluation, ce quelle que soit la couleur de l'objet (2) en défilement sur lequel la bande éclairée (6) est appliquée, et **en ce que** le ou chaque faisceau d'éclairage (5) consiste en un faisceau provenant d'une source de lumière incohérente (4').

2. Dispositif selon la revendication 1, **caractérisé en ce que** la bande éclairée (6) formée sur la surface support mobile (3) présente une largeur, dans la direction de défilement (D), de l'ordre d'environ 20 mm.

3. Dispositif selon la revendication 1 ou 2, **caractérisé en ce que** l'angle de parallaxe (AP) est supérieur à 10°, avantageusement compris entre 10° et 50°, le moyen d'éclairage (4) et le moyen de détection (7) étant situés du même côté ou non d'un plan (PP) perpendiculaire à la surface support (3) et parallèle à la bande éclairée (6).

4. Dispositif selon l'une quelconque des revendications 1 à 3, **caractérisé en ce que** l'unique ou chaque moyen de détection (7) est une caméra matricielle, la représentation exploitée de la bande éclairée (6) au niveau du moyen de détection (7) et/ou du moyen de traitement et d'évaluation (8) consistant avantageusement en une ligne (LP), s'étendant préférentiellement, en l'absence d'objet (2) impacté par la bande éclairée (6), dans la partie inférieure de l'image fournie par le moyen de détection (7) et analysée par le moyen de traitement et d'évaluation (8).

5. Dispositif selon l'une quelconque des revendications 1 à 4, **caractérisé en ce que** le ou chaque moyen d'éclairage (4) comprend, d'une part, au moins une source de lumière incohérente (4'), à constitution allongée et arrangée transversalement à la direction de défilement (D), et, d'autre part, au moins un élément (4") focalisant le rayonnement émis par cette ou ces source(s) de lumière (4') pour générer la bande éclairée (6) au niveau de la surface support (3).

6. Dispositif selon l'une quelconque des revendications 1 à 5, **caractérisé en ce que** le ou chaque moyen d'éclairage (4) fournit un éclairage permanent au niveau de la bande (6) et comprend au moins une source de lumière (4') sous la forme d'un filament rectiligne s'étendant transversalement à la direction de défilement (D) et un élément focalisant (4") sous la forme d'un réflecteur à section partiellement cylindro-elliptique, le filament (4') étant disposé à l'un des foyers de l'ellipse virtuelle du réflecteur (4") et l'autre foyer étant situé au voisinage de la surface support (3).

7. Dispositif selon l'une quelconque des revendications 1 à 5, **caractérisé en ce que** le ou chaque moyen d'éclairage (4) fournit un éclairage balayant au niveau de la bande éclairée (6) et comprend une source de lumière (4') fixe, sous la forme d'un filament par exemple, associée à un élément focalisant (4"), sous la forme d'un réflecteur à section partiellement elliptique par exemple, ledit moyen d'éclairage (4) comprenant en outre un élément de transmission (4"'), par exemple mobile, appliquant l'éclairage provenant de la source (4') et focalisé au niveau de la surface support (3) de manière à générer la bande éclairée (6) par balayage transversal.

8. Machine d'inspection et de tri automatique d'objets (2) défilant en flux (F) sensiblement monocouche sur un convoyeur, du type bande transporteuse par exemple, fournissant une surface support mobile (3) pour lesdits objets (2),
machine **caractérisée en ce qu'**elle comprend, monté au-dessus du convoyeur, au moins un dispositif d'inspection (1) selon l'une quelconque des revendications 1 à 7, le cas échéant plusieurs dispositifs (1) comprenant soit un moyen d'éclairage (4) commun et au moins deux moyens de détection (7) distincts, soit un moyen de détection (7) commun et au moins deux moyens d'éclairage (4) distincts ou encore correspondant à au moins deux modules distincts comprenant chacun un moyen d'éclairage (4) et un moyen de détection (7), arrangés côte à côte transversalement à la direction de défilement (D).

9. Procédé d'inspection d'objets (2) défilant en flux (F) sensiblement monocouche sur une surface support plane, (3) mobile selon une direction de défilement (D) longitudinale, ce par mise en œuvre d'un dispositif (1) comprenant, d'une part, au moins un moyen d'éclairage (4) fournissant un faisceau d'éclairage (5) avec un axe ou plan médian (PM), dirigé vers la surface support (3) et dont l'intersection avec cette surface support (3) consiste en une bande éclairée (6) qui s'étend transversalement à la direction de défilement (D) et sensiblement sur toute la largeur de ladite surface support (3), d'autre part, au moins un moyen (7) de détection présentant un axe ou un plan optique (AO) et une zone ou champ d'acquisition (7') englobant au moins la bande éclairée (6), des zones non éclairées (6') de la surface support (3) situées de part et d'autre le long de la dite bande éclairée (6) et un volume (VA) s'étendant au moins au-dessus de ladite bande éclairée (6), et éventuellement au-dessus des zones (6') non éclairées, et, enfin, un moyen (8) de traitement et d'évaluation des signaux ou données fourni(e)s par ledit au moins un moyen de détection (7) en vue de détecter la présence des objets défilants (2), de cartographier leur hauteur et/ou de déterminer leur volume extérieur, ces objets étant préférentiellement de couleur sombre ou noire, ledit dispositif étant configuré de telle manière que l'axe ou le plan médian (PM) du faisceau d'éclairage (5) et l'axe ou le plan optique (AO) présentent entre eux un angle (AP) non nul, dit angle de parallaxe et ledit procédé consistant à fournir, d'une part, une image de la bande éclairée (6) acquise par ledit au moins un moyen de détection (7) qui présente une largeur au moins égale à trois fois la résolution dudit moyen (7) et, d'autre part, une bande éclairée (6) au niveau de la surface support (3) qui est délimitée par deux bords parallèles rectilignes opposés (9, 9') mutuellement différentiables dans l'image, qui présente une largeur dans la direction de défilement (D) qui est supérieure à 10 mm, avantageusement comprise entre 10 mm et 30 mm, et qui présente un contraste suffisant par rapport aux zones non éclairées (6') pour être discernable par le moyen de détection (7) et exploitable par le moyen (8) de traitement et d'évaluation, ce quelle que soit la couleur de l'objet (2) en défilement sur lequel la bande éclairée (6) est appliquée, le ou chaque faisceau d'éclairage (5) consistant en un faisceau provenant d'une source de lumière incohérente (4').

10. Procédé selon la revendication 9, **caractérisé en ce qu'**il consiste à extraire de l'image de la bande éclairée (6), par l'intermédiaire d'au moins un programme de traitement de données adéquat exécuté par le moyen (8) de traitement et d'évaluation, au moins une ligne de profil (LP) représentant l'altitude par rapport à la surface support mobile (3) et à comparer cette ligne de profil à une valeur seuil minimale de présence d'objet, et le cas échéant à exploiter cette ligne de profil pour déterminer point par point la hauteur des objets (2) inspectés.

11. Procédé selon la revendication 10, **caractérisé en ce qu'**il consiste à analyser la luminance des lignes de profil (LP) successives d'un objet (2) et l'exploiter pour réaliser un classement dudit objet (2) en objet sombre ou objet clair.

12. Procédé selon la revendication 10 ou 11, **caractérisé en ce qu'**il consiste à réaliser une accumulation dans le temps des lignes de profil successives d'un même objet (2) pour en reconstituer la forme apparente et/ou en calculer le volume.

13. Procédé selon l'une quelconque des revendications 9 à 12, **caractérisé en ce que** le programme de détection de profil appliqué par le moyen (8) de traitement et d'évaluation met en œuvre une recherche de percentile de luminance détectée le long de chaque ligne perpendiculaire à l'image de la bande éclairée (6), suivie d'une opération de seuillage de la ligne de profil.

14. Procédé selon l'une quelconque des revendications 9 à 13, **caractérisé en ce que** le moyen (8) de traitement et d'évaluation met en œuvre deux opérations de détection de profil permettant de rechercher et d'exploiter deux limites, à savoir les intersections haute et basse de la bande éclairée (6) avec l'objet (2) présent.

15. Procédé selon la revendication 14, **caractérisé en ce qu'**il consiste à déterminer un premier profil en suivant une limite haute (LH) définie par un premier angle (α1) et un second profil en suivant une limite basse (LB) définie par un second angle (α2), ces deux limites (LH, LB) correspondant aux deux bords (9, 9') de la bande éclairée (6) projetée sur l'objet (2), et étant décalés dans le temps avec le défilement de l'objet (2) inspecté.

16. Procédé selon l'une quelconque des revendications 14 et 15, **caractérisé en ce que** les deux opérations sont distinctes et mises en œuvre séparément, les deux profils étant déterminés indépendamment l'un de l'autre.

17. Procédé selon l'une quelconque des revendications 9 à 16, **caractérisé en ce qu'**il consiste à mettre en œuvre au moins un dispositif d'inspection (1) selon l'une quelconque des revendications 1 à 7.

## Patentansprüche

1. Vorrichtung (1) zur Inspektion von Objekten (2), die in einem im Wesentlichen einschichtigen Fluss (F) auf einer gemäß einer Längsrichtung (D) beweglichen ebenen Auflagefläche (3) vorbeilaufen, wobei diese Vorrichtung (1) einerseits mindestens eine Beleuchtungseinrichtung (4), die einen Beleuchtungsstrahl (5) mit einer Achse oder Mittelebene (PM) liefert, der zur Auflagefläche (3) gerichtet ist und dessen Schnittstelle mit dieser Auflagefläche (3) aus einem beleuchteten Streifen (6) besteht, der sich quer zur Vorbeilaufrichtung (D) und über die ganze oder einen Teil der Breite der Auflagefläche (3) erstreckt, andererseits mindestens eine Erkennungseinrichtung (7), die eine Achse oder eine optische Ebene (AO) und ein Erfassungsfeld (7'), das in der Richtung quer zur Vorbeilaufrichtung (D) eine Abmessung höchstens gleich derjenigen des beleuchteten Streifens (6) aufweist, und in der Vorbeilaufrichtung (D) ebenfalls nicht beleuchtete Bereiche (6') der Auflagefläche (3), die dem beleuchteten Streifen (6) vor- und nachgelagert sind, und ein Volumen (VA) umfasst, das sich mindestens über dem beleuchteten Streifen oder Teilstreifen (6) und ggf. über den nicht beleuchteten Bereichen (6') erstreckt, und schließlich eine Einrichtung (8) zur Verarbeitung und Auswertung der Signale oder Daten enthält, die von der mindestens einen Erkennungseinrichtung (7) geliefert werden, um das Vorhandensein der vorbeilaufenden Objekte (2) zu erkennen, ihre Höhe zu kartieren und/oder ihr Außenvolumen zu bestimmen, wobei diese Objekte (2) vorzugsweise von dunkler oder schwarzer Farbe sind, wobei die Achse oder die Mittelebene (PM) des Beleuchtungsstrahls oder der Beleuchtungsstrahlen (5) und die Achse oder die optische Ebene (AO) der Erkennungseinrichtung oder Erkennungseinrichtungen (7) zwischen sich einen Winkel (AP) ungleich Null aufweisen, Parallaxenwinkel genannt, und das von der mindestens einen Erkennungseinrichtung (7) erfasste Bild des beleuchteten Streifens (6) weist eine Breite gleich mindestens dem Dreifachen, vorzugsweise mindestens dem Zehnfachen der Auflösung der Einrichtung (7) auf,
wobei die Vorrichtung (1) **dadurch gekennzeichnet ist, dass** die mindestens eine Beleuchtungseinrichtung (4) so konfiguriert und angeordnet ist, dass der im Bereich der Auflagefläche (3) erzeugte beleuchtete Streifen (6) eine Breite in der Vorbeilaufrichtung (D) aufweist, die größer ist als 10 mm, vorteilhafterweise zwischen 10 mm und 30 mm liegt, in Abwesenheit eines Objekts (2), durch zwei gegenüberliegende geradlinige parallele Ränder (9, 9') begrenzt wird, die klare Grenzen im Bild dieses beleuchteten Streifens (6) formen, und einen ausreichenden Kontrast im Verhältnis zu den nicht beleuchteten Bereichen (6') aufweist, um von der Erkennungseinrichtung (7) und der Einrichtung (8) zur Verarbeitung und Auswertung wahrnehmbar zu sein, und dies unabhängig von der Farbe des vorbeilaufenden Objekts (2), an das der beleuchtete Streifen (6) angewendet wird, und dass der oder jeder Beleuchtungsstrahl (5) aus einem Strahl besteht, der von einer Quelle inkohärenten Lichts (4') kommt.

2. Vorrichtung nach Anspruch 1, **dadurch gekennzeichnet, dass** der auf der beweglichen Auflagefläche (3) geformte beleuchtete Streifen (6) eine Breite in der Vorbeilaufrichtung (D) in der Größenordnung von etwa 20 mm aufweist.

3. Vorrichtung nach Anspruch 1 oder 2, **dadurch gekennzeichnet, dass** der Parallaxenwinkel (AP) größer ist als 10°, vorteilhafterweise zwischen 10° und 50° liegt, wobei die Beleuchtungseinrichtung (4) und die Erkennungseinrichtung (7) sich auf der gleichen Seite einer Ebene (PP) lotrecht zur Auflagefläche (3) und parallel zum beleuchteten Streifen (6) befinden oder nicht.

4. Vorrichtung nach einem der Ansprüche 1 bis 3, **dadurch gekennzeichnet, dass** die einzige oder jede Erkennungseinrichtung (7) eine Matrixkamera ist, wobei die ausgewertete Darstellung des beleuchteten Streifens (6) im Bereich der Erkennungseinrichtung (7) und/oder der Verarbeitungs- und Auswertungseinrichtung (8) vorteilhafterweise aus einer Linie (LP) besteht, die sich vorzugsweise, in Abwesenheit eines Objekts (2), auf das der beleuchtete Streifen (6) einwirkt, im unteren Bereich des Bilds erstreckt, das von der Erkennungseinrichtung (7) geliefert und von der Verarbeitungs- und Auswertungseinrichtung (8) analysiert wird.

5. Vorrichtung nach einem der Ansprüche 1 bis 4, **dadurch gekennzeichnet, dass** die oder jede Beleuchtungseinrichtung (4) einerseits mindestens eine Quelle inkohärenten Lichts (4') von länglicher Gestalt und quer zur Vorbeilaufrichtung (D) angeordnet, und andererseits mindestens ein Element (4") enthält, das die von dieser oder diesen Lichtquelle(n) (4') emittierte Strahlung fokussiert, um den beleuchteten Streifen (6) im Bereich der Auflagefläche (3) zu erzeugen.

6. Vorrichtung nach einem der Ansprüche 1 bis 5, **dadurch gekennzeichnet, dass** die oder jede Beleuchtungseinrichtung (4) eine Dauerbeleuchtung im Bereich des Streifens (6) liefert und mindestens eine Lichtquelle (4') in Form eines geradlinigen Glühfadens, der sich quer zur Vorbeilaufrichtung (D) erstreckt, und ein fokussierendes Element (4") in Form eines Reflektors mit teilweise zylindrisch-elliptischem Querschnitt enthält, wobei der Glühfaden (4') an einem der Brennpunkte der virtuellen Ellipse des Reflektors (4") angeordnet ist und der andere Brennpunkt sich in der Nähe der Auflagefläche (3) befindet.

7. Vorrichtung nach einem der Ansprüche 1 bis 5, **dadurch gekennzeichnet, dass** die oder jede Beleuchtungseinrichtung (4) eine Abtastbeleuchtung im Bereich des beleuchteten Streifens (6) liefert und eine ortsfeste Lichtquelle (4') zum Beispiel in Form eines Glühfadens enthält, die einem fokussierenden Element (4") zum Beispiel in Form eines Reflektors mit teilweise elliptischem Querschnitt zugeordnet ist, wobei die Beleuchtungseinrichtung (4) außerdem ein zum Beispiel bewegliches Übertragungselement (4‴) enthält, das die von der Quelle (4') kommende und im Bereich der Auflagefläche (3) fokussierte Beleuchtung so anwendet, dass der beleuchtete Streifen (6) durch Querabtastung erzeugt wird.

8. Maschine zur Inspektion und zum automatischen Sortieren von Objekten (2), die in im Wesentlichen einschichtigem Fluss (F) auf einem Förderer vorbeilaufen, zum Beispiel von der Art Transportband, der eine bewegliche Auflagefläche (3) für die Objekte (2) liefert, wobei die Maschine **dadurch gekennzeichnet ist, dass** sie über dem Förderer montiert mindestens eine Inspektionsvorrichtung (1) nach einem der Ansprüche 1 bis 7 enthält, ggf. mehrere Vorrichtungen (1), die entweder eine gemeinsame Beleuchtungseinrichtung (4) und mindestens zwei unterschiedliche Erkennungseinrichtungen (7) oder eine gemeinsame Erkennungseinrichtung (7) und mindestens zwei unterschiedliche Beleuchtungseinrichtungen (4) enthalten oder auch mindestens zwei unterschiedlichen Modulen entsprechen, die je eine Beleuchtungseinrichtung (4) und eine Erkennungseinrichtung (7) enthalten, die nebeneinander quer zur Vorbeilaufrichtung (D) angeordnet sind.

9. Verfahren zur Inspektion von Objekten (2), die in einem im Wesentlichen einschichtigem Fluss (F) auf einer gemäß einer Längsvorbeilaufrichtung (D) beweglichen ebenen Auflagefläche (3) vorbeilaufen, dies durch Implementierung einer Vorrichtung (1), die einerseits mindestens eine Beleuchtungseinrichtung (4), die einen Beleuchtungsstrahl (5) mit einer Achse oder Mittelebene (PM) liefert, der zur Auflagefläche (3) gerichtet ist und dessen Schnittstelle mit dieser Auflagefläche (3) aus einem beleuchteten Streifen (6) besteht, der sich quer zur Vorbeilaufrichtung (D) und im Wesentlichen über die ganze Breite der Auflagefläche (3) erstreckt, andererseits mindestens eine Erkennungseinrichtung (7), die eine Achse oder eine optische Ebene (AO) und einen Erfassungsbereich oder ein Erfassungsfeld (7') aufweist, der/das mindestens den beleuchteten Streifen (6), nicht beleuchtete Bereiche (6') der Auflagefläche (3), die sich zu beiden Seiten entlang des beleuchteten Streifens (6) befinden, und ein Volumen (VA) umfasst, das sich mindestens über dem beleuchteten Streifen (6) und ggf. über den nicht beleuchteten Bereichen (6') erstreckt, und schließlich eine Einrichtung (8) zur Verarbeitung und Auswertung der Signale oder Daten enthält, die von der mindestens einen Erkennungseinrichtung (7) geliefert werden, um das Vorhandensein der vorbeilaufenden Objekte (2) zu erkennen, ihre Höhe zu kartieren und/oder ihr Außenvolumen zu bestimmen, wobei diese Objekte vorzugsweise von dunkler oder schwarzer Farbe sind, wobei die Vorrichtung so konfiguriert ist, dass die Achse oder die Mittelebene (PM) des Beleuchtungsstrahls (5) und die Achse oder die optische Ebene (AO) zwischen sich einen Winkel (AP) ungleich Null aufweisen, Parallaxenwinkel genannt, und das Verfahren darin besteht, einerseits ein von der mindestens einen Erkennungseinrichtung (7) erfasstes Bild des beleuchteten Streifens (6), das eine Breite gleich mindestens dem Dreifachen der Auflösung der Einrichtung (7) aufweist, und andererseits einen beleuchteten Streifen (6) im Bereich der Auflagefläche (3) zu liefern, der von zwei gegenüberliegenden geradlinigen parallelen Rändern (9, 9') begrenzt wird, die im Bild voneinander unterscheidbar sind, der eine Breite in der Vorbeilaufrichtung (D) aufweist, die größer ist als 10 mm, vorteilhafterweise zwischen 10 mm und 30 mm liegt, und der einen ausreichenden Kontrast bezüglich der nicht beleuchteten Bereiche (6') aufweist, um von der Erkennungseinrichtung (7) wahrnehmbar und von der Verarbeitungs- und Auswertungseinrichtung (8) verwertbar zu sein, dies unabhängig von der Farbe des vorbeilaufenden Objekts (2), an das der beleuchtete Streifen (6) angewendet wird, wobei der oder jeder Beleuchtungsstrahl (5) aus einem von einer Quelle inkohärenten Lichts (4') kommenden Strahl besteht.

10. Verfahren nach Anspruch 9, **dadurch gekennzeichnet, dass** es darin besteht, aus dem Bild des beleuchteten Streifens (6) mittels mindestens eines geeigneten Datenverarbeitungsprogramms, das von der Verarbeitungs- und Auswertungseinrichtung (8) ausgeführt wird, mindestens eine Profillinie (LP) zu extrahieren, die die Höhe bezüglich der beweglichen Auflagefläche (3) darstellt, und diese Profillinie mit einem Mindestschwellwert eines Objektvorhandenseins zu vergleichen, und ggf. diese Profillinie auszuwerten, um die Höhe der inspizierten Objekte (2) Punkt für Punkt zu bestimmen.

11. Verfahren nach Anspruch 10, **dadurch gekennzeichnet, dass** es darin besteht, die Leuchtdichte der aufeinanderfolgenden Profillinien (LP) eines Objekts (2) zu analysieren und sie auszuwerten, um eine Einordnung des Objekts (2) als dunkles Objekt oder helles Objekt durchzuführen.

12. Verfahren nach Anspruch 10 oder 11, **dadurch gekennzeichnet, dass** es darin besteht, eine zeitliche Akkumulierung der aufeinanderfolgenden Profillinien eines gleichen Objekts (2) durchzuführen, um daraus die sichtbare Form wiederherzustellen und/oder das Volumen zu berechnen.

13. Verfahren nach einem der Ansprüche 9 bis 12, **dadurch gekennzeichnet, dass** das von der Verarbeitungs- und Auswertungseinrichtung (8) angewendete Profilerkennungsprogramm eine Suche eines Perzentils einer entlang jeder Linie lotrecht zum Bild des beleuchteten Streifens (6) erkannten Leuchtdichte gefolgt von einem Vorgang der Schwellwertbildung der Profillinie implementiert.

14. Verfahren nach einem der Ansprüche 9 bis 13, **dadurch gekennzeichnet, dass** die Verarbeitungs- und Auswertungseinrichtung (8) zwei Profilerkennungsvorgänge implementiert, die es ermöglichen, zwei Grenzen zu suchen und auszuwerten, nämlich die oberen und unteren Schnittstellen des beleuchteten Streifens (6) mit dem vorhandenen Objekt (2).

15. Verfahren nach Anspruch 14, **dadurch gekennzeichnet, dass** es darin besteht, ein erstes Profil entlang einer durch einen ersten Winkel (α1) definierten Obergrenze (LH) und ein zweites Profil entlang einer durch einen zweiten Winkel (α2) definierten Untergrenze (LB) zu bestimmen, wobei diese zwei Grenzen (LH, LB) den zwei Rändern (9, 9') des auf das Objekt (2) projizierten beleuchteten Streifens (6) entsprechen, und die mit dem Vorbeilauf des Objekts (2) zeitlich versetzt werden.

16. Verfahren nach einem der Ansprüche 14 und 15, **dadurch gekennzeichnet, dass** die zwei Vorgänge verschieden sind und getrennt implementiert werden, wobei die zwei Profile unabhängig voneinander bestimmt werden.

17. Verfahren nach einem der Ansprüche 9 bis 16, **dadurch gekennzeichnet, dass** es darin besteht, mindestens eine Inspektionsvorrichtung (1) nach einem der Ansprüche 1 bis 7 zu implementieren.

## Claims

1. Device (1) for inspecting objects (2) moving in a substantially monolayer flow (F) on a flat support surface (3) moving in a longitudinal direction (D), said device (1) comprising, on the one hand, at least one lighting means (4) providing a lighting beam (5) with a median plane or axis (PM), directed toward the support surface (3) and for which the intersection with this support surface (3) is made up of an illuminated strip (6), which extends transverse to the direction of movement (D) and over all or part of the width of said support surface (3), on the other hand, at least one detection means (7) having an optical axis or plane (AO) and an acquisition field (7'), the dimension of which, in the direction transverse to the direction of movement (D), is at most equal to that of the illuminated strip (6), and also encompassing, in the direction of movement (D), non-illuminated zones (6') of the support surface (3) located upstream and downstream of said illuminated strip (6) and a volume (VA) extending at least above said illuminated strip or strip portion (6), and optionally above the non-illuminated zones (6'), and, finally, means (8) for processing and evaluating the signals or data provided by said at least one detection means (7) with a view to detecting the presence of the moving objects (2), of mapping their height and/or of determining their external volume, with these objects (2) preferably being dark or black, with the median plane or axis (PM) of the one or more lighting beam(s) (5) and the optical axis or plane (AO) of the detection means (7) having a non-zero angle (AP) between them, called parallax angle, and the image of the illuminated strip (6) acquired by said at least one detection means (7) has a width that is equal to at least three times, preferably at least ten times,
the resolution of said means (7),
said device (1) being **characterized in that** said at least one lighting means (4) is configured and arranged such that the illuminated strip (6) generated on the support surface (3) has a width in the direction of movement (D) that is greater than 10 mm, advantageously ranging between 10 mm and 30 mm, is delimited, in the absence of an object (2), by two opposing straight parallel edges (9, 9'), which form clear limits in the image of this illuminated strip (6), and has sufficient contrast relative to the non-illuminated zones (6') in order to be perceptible by the detection means (7) and the processing and evaluation means (8), irrespective of the color of the moving object (2) on which the illuminated strip (6) is applied, and **in that** the one or each lighting beam (5) is made up of a beam originating from an incoherent light source (4').

2. Device according to Claim 1, **characterized in that** the illuminated strip (6) formed on the moving support surface (3) has a width, in the direction of movement (D), of the order of approximately 20 mm.

3. Device according to Claim 1 or 2, **characterized in that** the parallax angle (AP) is greater than 10°, advantageously ranging between 10° and 50°, the lighting means (4) and the detection means (7) may or may not be located on the same side of a plane (PP) perpendicular to the support surface (3) and parallel to the illuminated strip (6).

4. Device according to any one of Claims 1 to 3, **characterized in that** the single or each detection means (7) is a matrix camera, with the representation of the illuminated strip (6) used on the detection means (7) and/or the processing and evaluation means (8) advantageously being made up of a row (LP), preferably extending, in the absence of an object (2) impacted by the illuminated strip (6), in the lower part of the image provided by the detection means (7) and analyzed by the processing and evaluation means (8).

5. Device according to any one of Claims 1 to 4, **characterized in that** the one or each lighting means (4) comprises, on the one hand, at least one incoherent light source (4'), with an elongated constitution and arranged transverse to the direction of movement (D), and, on the other hand, at least one element (4'') focusing the radiation emitted by this or these light source(s) (4') in order to generate the illuminated strip (6) on the support surface (3).

6. Device according to any one of Claims 1 to 5, **characterized in that** the one or each lighting means (4) provides permanent lighting on the strip (6) and comprises at least one light source (4') in the form of a straight filament extending transverse to the direction of movement (D) and a focusing element (4'') in the form of a reflector with a partially cylindrical-elliptical section, with the filament (4') being disposed at one of the focal points of the virtual ellipse of the reflector (4") and the other focal point being located in the vicinity of the support surface (3).

7. Device according to any one of Claims 1 to 5, **characterized in that** the one or each lighting means (4) provides lighting scanning over the illuminated strip (6) and comprises a fixed light source (4'), in the form of a filament, for example, associated with a focusing element (4"), in the form of a reflector with a partially elliptical section, for example, said lighting means (4) further comprising a movable transmission element (4‴), for example, applying the lighting originating from the source (4') and focused on the support surface (3) so as to generate the illuminated strip (6) by transverse scanning.

8. Machine for automatically inspecting and sorting objects (2) moving in a substantially monolayer flow (F) on a conveyor, of the conveyor belt type, for example, providing a moving support surface (3) for said objects (2),
said machine being **characterized in that** it comprises, mounted above the conveyor, at least one inspection device (1) according to any one of Claims 1 to 7, if appropriate a plurality of devices (1) comprising either a common lighting means (4) and at least two distinct detection means (7) or a common detection means (7) and at least two distinct lighting means (4) or else corresponding to at least two distinct modules each comprising a lighting means (4) and a detection means (7), arranged side-by-side transverse to the direction of movement (D).

9. Method for inspecting objects (2) moving in a substantially monolayer flow (F) on a flat support surface (3) moving in a longitudinal direction of movement (D), by implementing a device (1) comprising, on the one hand, at least one lighting means (4) providing a lighting beam (5) with a median plane or axis (PM), directed toward the support surface (3) and for which the intersection with this support surface (3) is made up of an illuminated strip (6), which extends transverse to the direction of movement (D) and substantially over the entire width of said support surface (3), on the other hand, at least one detection means (7) having an optical axis or plane (AO) and an acquisition zone or field (7') encompassing at least the illuminated strip (6), non-illuminated zones (6') of the support surface (3) located on either side along said illuminated strip (6) and a volume (VA) extending at least above said illuminated strip (6), and optionally above the non-illuminated zones (6'), and, finally, means (8) for processing and evaluating the signals or data provided by said at least one detection means (7) with a view to detecting the presence of the moving objects (2), of mapping their height and/or of determining their external volume, with these objects preferably being dark or black, said device being configured such that the median plane or axis (PM) of the lighting beam (5) and the optical axis or plane (AO) have a non-zero angle (AP) between them, called parallax angle, and said method involving providing, on the one hand, an image of the illuminated strip (6) acquired by said at least one detection means (7) that has a width that is at least equal to three times the resolution of said means (7), and, on the other hand, an illuminated strip (6) on the support surface (3) that is delimited by two opposing straight parallel edges (9, 9') that can be mutually differentiated in the image, that has a width in the direction of movement (D) that is greater than 10 mm, advantageously ranging between 10 mm and 30 mm, and that has sufficient contrast relative to the non-illuminated zones (6') in order to be perceptible by the detection means (7) and usable by the processing and evaluation means (8), irrespective of the color of the moving object (2) on which the illuminated strip (6) is applied, with the one or each lighting beam (5) being made up of a beam originating from an incoherent light source (4').

10. Method according to Claim 9, **characterized in that** it involves extracting, from the image of the illuminated strip (6), by means of at least one suitable data processing program executed by the processing and evaluation means (8), at least one profile line (LP) representing the altitude relative to the moving support surface (3), and comparing this profile line with a minimum threshold value for the presence of an object, and, if appropriate, using this profile line in order to determine the height of the inspected objects (2) point-by-point.

11. Method according to Claim 10, **characterized in that** it involves analyzing the luminance of the successive profile lines (LP) of an object (2) and using it in order to classify said object (2) as a dark object or a clear object.

12. Method according to Claim 10 or 11, **characterized in that** it involves accumulating the successive profile lines of the same object (2) over time in order to reconstitute the apparent shape and/or to compute the volume thereof.

13. Method according to any one of Claims 9 to 12, **characterized in that** the profile detection program applied by the processing and evaluation means (8) implements a search for the luminance percentile detected along each line perpendicular to the image of the illuminated strip (6), followed by an operation for thresholding the profile line.

14. Method according to any one of Claims 9 to 13, **characterized in that** the processing and evaluation means (8) implements two profile detection operations for finding and using two limits, namely the high and low intersections of the illuminated strip (6) with the object (2) that is present.

15. Method according to Claim 14, **characterized in that** it involves determining a first profile following a high limit (LH) defined by a first angle (*α*1) and a second profile following a low limit (LB) defined by a second angle (*α*2), with these two limits (LH, LB) corresponding to the two edges (9, 9') of the illuminated strip (6) projected onto the object (2), and being offset in time with the movement of the inspected object (2).

16. Method according to any one of Claims 14 and 15, **characterized in that** the two operations are distinct and are implemented separately, with the two profiles being determined independently of each other.

17. Method according to any one of Claims 9 to 16, **characterized in that** it involves implementing at least one inspection device (1) according to any one of Claims 1 to 7.
